# EUROPÄISCHE PATENTSCHRIFT

(11) **EP 0 861 159 B1**
(45) Veröffentlichungstag und Bekanntmachung des Hinweises auf die Patenterteilung: **25.08.1999**
(21) Anmeldenummer: 96938214.2
(22) Anmeldetag: 15.11.1996
(51) Int. Cl.: B60C 23/04

(54) **VERFAHREN ZUM ZUORDNEN VON SENDERN EINES REIFENDRUCKÜBERWACHUNGSSYSTEMS ZU EINEM BESTIMMTEN FAHRZEUG**
METHOD OF ALLOCATING TRANSMITTERS OF A TYRE PRESSURE MONITORING SYSTEM TO A PARTICULAR VEHICLE
PROCEDE D'AFFECTATION DES EMETTEURS D'UN SYSTEME DE SURVEILLANCE DE LA PRESSION DES PNEUS A UN VEHICULE PRECIS

(30) Priorität: 17.11.1995 DE 19542833; 05.03.1996 DE 19608479
(43) Veröffentlichungstag der Anmeldung: 02.09.1998
(73) Patentinhaber: AMI DODUCO GmbH, 75181 Pforzheim (DE)
(72) Erfinder: NORMANN, Norbert, D-75223 Niefern-Öschelbronn (DE); KESSLER, Rolf, D-76237 Söllingen (DE); SCHULZE, Gunter, D-75228 Ispringen (DE)
(74) Vertreter: Twelmeier, Ulrich, Dipl. Phys.
(86) Internationale Anmeldenummer: EP9605019
(87) Internationale Veröffentlichungsnummer: WO9718961

(56) Entgegenhaltungen:
- WO-A-93/16891
- WO-A-94/20317
- WO-A-96/15919

## Beschreibung

Die Erfindung geht aus von einem Verfahren mit den im Oberbegriff des Anspruchs 1 angegebenen Merkmalen. Ein solches Verfahren ist aus der WO 93/16891 bekannt. Dort wird eine Kombination aus Druckmeßfühler, Sender und Sendeantenne am Rad mit jeweils zugeordneten Empfangsantennen und einer zentralen Auswerteelektronik an der Karosserie verwendet. Das Problem, das sich bei solchen Reifendrucküberwachungssystemen stellt, ist die eindeutige Zuordnung der Sender zu der jeweiligen Radposition. In der WO 93/16891 wird dieses Problem der Positionserkennung wie folgt gelöst: Die Sender erzeugen ein in vier Abschnitte unterteiltes Signal, bestehend aus Präambel, Identifikationssignal, Meßsignal und Postambel. Anhand des Identifikationssignals kann die zentrale Auswerteelektronik die Position erkennen. Dafür muß jedoch zunächst eine Initialisierung durchgeführt werden, in deren Verlauf das jeweilige Identikationssignal, verknüpft mit der jeweiligen Position, von der zentralen Auswerteelektronik abgespeichert wird. Um diese Initialisierung durchzuführen, muß das System in einen sogenannten Paarungsmodus geschaltet werden und dann der Reihe nach jeder einzelne Sender einmal aktiviert werden. Danach wird das System wieder in den Meßmodus gebracht, bis sich die Senderpositionen, z.B. bei einem Radwechsel, ändern. Das heißt aber, daß bei jedem Radwechsel eine entsprechend eingewiesene Person diese Initialisierung durchführen muß Radwechsel in jeder beliebigen Werkstatt oder zu Hause sind dadurch unter Umständen nicht möglich, bzw. nur auf Kosten der Sicherheit. Die einwandfreie Funktion des Systems kann aufgrund moglicher Bedienungsfehler nicht gewährleistet werden.

In der WO 93/08036 wird das Problem umgangen, indem die Informationen der Druckmeßfühler und der daran angeschlossenen Sendeelektronik nicht mit Hilfe einer zentralen Auswerteelektronik an der Karosserie registriert werden, sondern mit Hilfe eines Fernbedienungselementes. Dieses Fernbedienungselement besitzt eine LCD-Anzeigeeinrichtung, die das Ablesen des Reifendruckes ermöglicht Will man den Reifendruck ermitteln, so muß man an jedem einzelnen Rad die gewünschte Information mit Hilfe des Fernbedienungselementes abfragen. Dieses Verfahren bietet zwar den Vorteil einer eindeutigen Zuordnung der Meßwerte, ermöglicht jedoch keine Kontrolle des Reifendrucks während der Fahrt.

**Aufgabe** der vorliegenden Erfindung ist es daher, ein Verfahren zu entwickeln, welches auch unerfahrenen Mechanikern und Automobilbesitzern keine besonderen Fähigkeiten abverlangt, wenn es darum geht, beim erstmaligen Montieren von Rädern und nach einem Radwechsel anhand der von mehreren Rädern ausgesandten Signale mit verschiedenen Signalkennungen zu erkennen, welche Signale von den eigenen Rädern des Fahrzeugs stammen. Ein Versagen aufgrund möglicher Bedienungsfehler soll ausgeschlossen werden können.

Erfindungsgemäß wird die Aufgabe durch die im Anspruch 1 aufgeführten Merkmale gelöst. Die zentrale Auswerteelektronik registriert die Intensitäten, mit denen mehrere Sender auf einer Empfangsantenne empfangen werden. Diese Werte werden dann verglichen. Dabei werden mehrere aufeinanderfolgend empfangene Signale berücksichtigt, um fehlerhafte Zuordnungen zu vermeiden. Aus den mehreren Signalen kann z.B. ein Mittelwert gebildet werden, oder man zählt einfach, wie häufig das Ereignis eintritt, daß eine Antenne einen Sender, d.h. ein Signal mit einer bestimmten Kennung am stärksten empfängt (Anspruch 2). Anschließend wird anhand des Mittelwerts bzw. anhand der größten Anzahl von Ereignissen der mit dieser Kennung sendende Sender bzw. das zugehörige Rad als zum eigenen Fahrzeug gehörend eingestuft und die Kennung als Kennung eines eigenen Rades in der zentralen Empfangs- und Auswerteelektronik abgespeichert. Entsprechend verfährt man mit dem zweitstärksten Signal, dem drittstärksten Signal, usw., bis man die N stärksten Signale ermittelt hat, wobei N die Anzahl der am Fahrzeug montierten Räder ist, in welche ein mitgeführtes Reserverad eingeschlossen werden kann, wenn es so untergebracht ist, daß die von ihm ausgesandten Signale nicht zu stark abgeschirmt werden. Sollte ein Reserverad z.B. im Kofferraum so stark abgeschirmt werden, daß die von ihm ausgesandten Signale nicht stärker empfangen werden als die von benachbarten Fahrzeugen ausgehenden Signale, dann sollte das Reserverad in das erfindungsgemäße Erkennungsverfahren nicht einbezogen werden.

Hat das Fahrzeug z.B. vier Räder, dann werden erfindungsgemäß die vier stärksten Signale mit vier unterschiedlichen Kennungen ermittelt und abgespeichert, bei Berücksichtigung eines Reserverades können es auch fünf Kennungen für die insgesamt fünf Räder sein. Sofern danach noch Signale empfangen werden, die eine Kennung haben, die mit keiner der abgespeicherten Kennungen übereinstimmt, werden diese bei der Reifendrucküberwachung nicht oder auf untergeordnete Weise (s.u.) berücksichtigt.

Soll zwischen Laufrädern eines Fahrzeugs und einem oder mehreren im Fahrzeug mitgeführten Reserverädern unterschieden werden, dann ist das mit Vorteil durch die im Anspruch 8 angegebene Weiterbildung der Erfindung möglich.

Signale, welche von Sendern stammen, die sich an Rädern befinden, welche sich drehen (laufende Räder), werden mit schwankenden Signalpegeln empfangen, weil sich die Lage des Senders relativ zur Empfangsantenne infolge der Raddrehung zyklisch ändert. Bei mitgeführten Reserverädern ist das anders Werden Signale empfangen, die von einem Reserverad ausgesandt sind, dann weisen die se keine durch den Fahrbetrieb bedingten Schwankungen ihres Signalpegels auf Das macht es möglich, ein zusätzliches Kriterium zu finden, mit welchem sich Signale, die von einem Reserverad kommen, unterscheiden lassen von Signalen: die von laufenden Rädern kommen. Zeigt ein empfangenes Signal im Fahrbetrieb keine von der Raddrehung verursachten Schwankungen des Signalpegels, dann kann man daraus folgern, daß es von einem mitgeführten Reserverad stammt, nicht aber von einem Laufrad, und zwar selbst dann nicht, wenn dieses Signal, dessen Pegel keine fahrbedingten Schwankungen aufweist, von der Empfangsantenne mit der größten Intensität empfangen wird. Ein solches Signal wird gemäß dem Anspruch 8 entweder einem Reserverad zugeordnet oder bleibt völlig unberücksichtigt (letzteres insbesondere dann, wenn mitgeführte Reserveräder nicht überwacht werden sollen). Diese Weiterbildung der Erfindung hat den Vorteil, daß die Gefahr von fehlerhaften Zuordnungen ein weiteres Mal verringert wird. Das gilt insbesondere im Hinblick auf jene Lathräder, welche von der Empfangsantenne ungefähr gleich weit oder weiter entfernt liegen als das Reserverad, so daß das vom Reserverad ausgesandte Signal mit annähernd gleich hoher oder höherer Intensität empfangen wird als die von einem Laufrad ausgesandten Signale. Die Weiterbildung der Erfindung stellt sicher, daß es auch in diesem ungünstigen Fall nicht zu einer fehlerhaften Zuordnung kommt.

Das im Anspruch 8 angegebene Verfahren ist nicht nur nützlich, wenn wie üblich ein einzelnes Reserverad mitgeführt wird, sondern auch dann, wenn mehrere Ersatzräder oder Austauschräder mitgeführt werden. Wenn man z.B. zusätzliche Räder mit Winterreifen im Kofferraum mitführt, dann können die von diesen ausgesandten Signalen die gewünschte Zuordnung der Laufräder zu ihrer Empfangsantenne nicht stören.

Eine andere Möglichkeit, Signale, die von sich drehenden Rädern kommen, zu unterscheiden von Signalen, welche von Ersatzrädern kommen, ist im Anspruch 9 angegeben. Diese Verfahrensweise kann anstelle oder in Kombination mit der Verfahrensweise im Anspruch 8 zur Anwendung kommen. Sie macht sich den Umstand zunutze, daß in der ersten Phase des Fahrbetriebes nach Fahrtbeginn die Reifentemperatur durch die Walkarbeit im allgemeinen ansteigt. Bei einem Reserverad ist das nicht der Fall, weil sein Reifen nicht gewalkt wird. Sieht man in dem Reifendrucküberwachungssystem an jedem Rad zusätzlich zum Druckmeßfühler auch einen Temperaturmeßfühler vor und überträgt mit dem vom Sender am Rad ausgesandten Signal nicht nur eine Information über den Reifendruck, sondern auch über die Reifentemperatur, dann kann ein nach Fahrtbeginn signalisierter Temperaturanstieg als Anzeichen dafür gewertet werden, daß das Signal von einem sich drehenden Rad, nicht aber von einem Reserverad stammt.

Es genügt, wenn das Fahrzeug lediglich eine einzige Empfangsantenne hat, die an geeigneter Stelle an der Unterseite der Karosserie oder des Fahrgestells angebracht ist, so daß sie von allen am Fahrzeug angebrachten Rädern Signale mit hinreichender Intensität empfangen kann. Es ist aber auch möglich, jedem Rad in dessen Nachbarschaft eine eigene Antenne zuzuordnen. In diesem Fall wird die Rangfolge der Intensität, mit der die Signale von den verschiedenen Antennen empfangen werden, von Antenne zu Antenne unterschiedlich sein, denn jede Antenne wird jene Signale mit der größten Intensität empfangen, die von dem ihr nächstliegenden Rad ausgehen. Die Gruppe der N stärksten Signale mit unterschiedlicher Kennung wird allerdings bei jeder der Empfangsantennen dieselbe sein, lediglich die Rangfolge innerhalb der Gruppe wird von Empfangsantenne zu Empfangsantenne anders sein. Um zu erkennen, welche Kennungen die zum eigenen Fahrzeug gehörenden Räder haben, genügt es, die N Mitglieder der Gruppe festzustellen. Sollte eine der Empfangsantennen eine Gruppe von N Signalen am stärksten empfangen, deren Kennungen nicht sämtlich übereinstimmen mit den N Kennungen, welche die anderen Empfangsantennen mit den N größten Intensitäten registriert haben, dann muß eine Fehlmessung vorliegen, die durch Wiederholung der Messung und Auswertung korrigierbar ist. Die Zuverlässigkeit der Erkennung kann durch das Arbeiten mit mehreren Antennen daher verbessert werden.

Da die einem Sender direkt benachbarte Empfangsantenne das Signal in der Regel mit größerer Intensität empfängt, als die anderen Empfangsantennen und zusätzlich noch mehrere Signale zur Auswertung hinzugezogen werden, ist mit die sern Verfahren nicht nur eine Erkennung der zum eigenen Fahrzeug gehörenden Räder und ihrer Kennungen möglich, sondern es ist auch möglich, zu erkennen, welches Rad sich an welcher Stelle des Fahrzeugs befindet.

Da das erfindungsgemäße Verfahren selbsttätig arbeitet, treten durch Bedienungsfehler von vornherein keine Probleme auf.

Wie die Erkennung der Position eines Rades mit bestimmter Kennung am Fahrzeug automatisch möglich ist, ist in der am selben Tage unter Beanspruchen der Prioritäten der deutschen Patentanmeldungen 195 42 833.1 und 196 08 478.4 eingereichten PCT-Patentanmeldung mit dem Titel "Verfahren zur Zuordnung von Sendern zu Empfangsantennen bei Reifendrucküberwachungssystemen" beschrieben, auf welche zur Vermeidung von Wiederholungen ausdrücklich Bezug genommen wird.

Eine mögliche Vorgehensweise zum Abspeichern der so erhaltenen Daten in der Auswerteelektronik beschreibt Anspruch 3. Dabei wird eine Zuordnungsmatrix bestehend aus allen Senderkennungen und Empfangsantennen gebildet. Der Wert in einer Matrixzelle wird im Verlauf des Zuordnungsverfahrens dann erhöht, wenn für die betreffende Kombination aus Empfangsantenne und Senderkennung die größte Intensität gemessen wird.

Hat das Reifendrucküberwachungssystem nur eine einzige zentral angebrachte Empfangsantenne, dann reduziert sich die Matrix auf eine Liste, in welche die Senderkennungen der empfangenen Signale eingetragen und entsprechend der empfangenen Intensität bewertet bzw. gewichtet werden.

Um das Erkennungsverfahren zu beschleunigen, läßt sich die im Anspruch 4 beschriebene Weiterbildung des erfindungsgemäßen Verfahrens anwenden. Wird, wie im Anspruch 4 beschrieben, der Wert einer Matrixzelle bzw. eines Listenplatzes nicht um einen festen Wert erhöht, sondern um einen mit der Intensität des zugehörigen Signals gewichteten Wert, so wird dies dazu führen, daß sich die Matrixzellen bzw. die Listenplätze mit den N größten Werten rascher ermitteln lassen. Entsprechend kann man dann, wenn man lediglich die Ereignisse zählt, daß ein Signal mit bestimmter Kennung von einer Antenne mit stärkster, zweitstärkster, ...., N-stärkster Intensität empfangen wurde, die Zählrate gewichten, indem man z. B. dann, wenn die Intensität eines Signals mit bestimmter Kennung an einer Antenne am höchsten war, das Ereignis N-fach zählt, beim zweitstärksten Signal N-1-fach zählt, beim drittstärksten Signal N-2-fach zählt, usw. .

Insgesamt wird so eine sichere und schnelle Zuordnung erreicht, die aufgrund ihrer selbsttätigen Arbeitsweise mögliche Bedienungsfehler ausschließt. Durch die in Anspruch 5 beschriebene Weiterbildung der Erfindung läßt sich erreichen, daß Änderungen oder auch Vertauschungen der Sender durch mögliche Radwechsel registriert werden, ohne daß ein Eingriff von außen in das System nötig wird. Dabei wird in regelmäßigen Zeitabständen der Wert der Listenplätze bzw. der Matrixzellen für Sender bei zugeordneten Empfangsantennen auf einen festen Wert Ds gesetzt, der Wert der Listenplätze bzw. Matrixzellen für Sender bei nicht zugeordneten Empfangsantennen dagegen auf Null. Der Wert Ds kann dazu dienen eine Zeit festzusetzen, nach der die Zuordnung erneut bestimmt wird. Dies könnte z.B. dadurch erreicht werden, daß von dem festen Wert Ds in definierten Zeitabständen heruntergezählt wird. Hat der Inhalt der betreffenden Matrixzellen bzw. Listenplätze dann den Wert Null erreicht, so wird die Zuordnung erneut ermittelt. Das könnte auch bei jedem Start des Fahrzeugs geschehen. Vorzugsweise wird eine Kennung nur dann als zum eigenen Fahrzeug gehörend bewertet, wenn die - ggfs. gewichtete - Intensität des empfangenen Signales einen Schwellenwert überschreitet. Dadurch wird die Sicherheit erhöht, daß ein nicht zum Fahrzeug gehörendes Rad, welches sich in der Nähe befindet, fälschlicherweise als zum eigenen Fahrzeug gehörend registriert wird. Außerdem lassen sich damit Fehlfunktionen des Senders eines zum eigenen Fahrzeug gehörenden Rades erkennen, z.B. das Ausbleiben eines Signales oder das zu schwache Abstrahlen eines Signales, oder das Schwächerwerden oder Ausfallen einer Batterie, welche den Sender des Rades betreibt. In diesem Fall kann die zentrale Empfangs- und Auswerteelektronik nur weniger als die Soll-Anzahl N Kennungen registrieren und eine Fehlermeldung abgeben. Zugleich wird verhindert, daß anstelle der Kennung eines eigenen Rades die Kennung eines schwächer empfangenen Signals von einem Rad registriert wird, welches einem anderen, in der Nähe befindlichen Fahrzeug angehört.

Es wird immer wieder vorkommen, daß Signale von Rädern empfangen werden, die zu anderen Fahrzeugen gehören, z.B. auf Parkplatzen von benachbarten Fahrzeugen, im Straßenverkehr von vorbleifahrenden Fahrzeugen, oder in einer Werkstatt Signale von Rädern, die in der Nähe des Fahrzeugs gelagert sind, oder auch von Rädern, die anläßlich eines Radwechsels im eigenen Fahrzeug zusätzlich mitgeführt werden. Signale mit Kennungen, die nicht mit abgespeicherten und dem eigenen Fahrzeug zugeordneten Kennungen übereinstimmen, werden vorzugsweise nicht völlig ignoriert, sondern in der zentralen Empfangs- und Auswerteelektronik in eine gesonderte Liste oder Matrix aufgenommen und darin vorbewertet. Erst dann, wenn sich in der gesonderten Liste oder Matrix eine oder mehrere Kennungen als eindeutig dominierend herausgestellt haben weil sie regelmäßig oder viel häufiger auftreten als andere Kennungen, erst dann werden sie beim das nächste Mal ablaufenden erfindungsgemäßen Erkennungsverfahren in Konkurrenz zu den vormalig als zum eigenen Fahrzeug zugehörig erkannten und registrierten Kennungen einbezogen, so daß zwischenzeitlich vorgenommene Radwechsel nun auch von der zentralen Empfangs- und Auswerteelektronik erfaßt und berücksichtigt werden können. Man könnte aber auch nach jedem Radwechsel willkürlich ein erfindungsgemäßes Erkennrungsverfahren starten.

## Patentansprüche

1. Verfahren zum Zuordnen von Sendern eines Reifendrucküberwachungssystems, welches aus je einem Druckmeßfühler, je einem Sender und je einer Sendeantenne an jedem von N Rädern eines Fahrzeugs, aus wenigstens einer ihnen zugeordneten Empfangsantenne an der Karosserie und aus einer angeschlossenen Empfangs- und Auswerteelektronik besteht, als zum eigenen Fahrzeug gehörend, durch Zuordnen einer das einzelne Rad kennzeichnenden Kennung zu seinem Sender, Aussenden von die Kennung enthaltenden Signalen und Weiterleiten der Signale an die zentrale Empfangs- und Auswerteelektronik,
**gekennzeichnet durch** die folgenden Verfahrensschritte:
Registrieren der Intensitäten der von der jeweiligen Empfangsantenne empfangenen, von verschiedenen Sendern stammenden Signale unter ihrer Kennung,
Vergleichen der Intensitäten der von ein und derselben Empfangsantenne empfangenen Signale unterschiedlicher Kennung derart, daß bei dem Intensitätsvergleich mehrere aufeinanderfolgend empfangene Signale berücksichtigt werden,
Auswählen jener N Senderkennungen, die in den mit den größten Intensitäten an einer Empfangsantenne empfangenen Signalen auftauchen, und
Abspeichern der N Senderkennungen in der zentralen Empfangs- und Auswerteelektronik als zum Fahrzeug gehörig.

2. Verfahren nach Anspruch 1, **dadurch gekennzeichnet**, daß die Ereignisse, bei denen Signale mit bestimmter Kennung von einer Empfangsantenne mit maximaler Intensität empfangen wurden, unter einer Adresse gezählt werden, welche die Kennung des Senders der betreffenden Antenne zuordnet.

3. Verfahren nach einem der vorstehenden Ansprüche, **dadurch gekennzeichnet**, daß in der Auswerteelektronik eine Liste, im Falle eines Fahrzeugs, welches mehrere Empfangsantennen hat, eine Matrix bestehend aus Senderkennungen und Empfangsantennen gebildet wird, in der der Wert des Listenplatzes einer Senderkennung bzw. der Wert der einzelnen Matrixzelle dann erhöht wird, wenn für die betreffende Kombination aus Senderkennung und Empfangsantenne die größte Intensität registriert wird.

4. Verfahren nach Anspruch 3, **dadurch gekennzeichnet**, daß der Wert, um den die Anzahl der Ereignisse einer bestimmten Zuordnung bei Auftreten eines weiteren Ereignisses erhöht bzw. der Inhalt einer Matrixzelle bzw. eines Listenplatzes erhöht wird, intensitätsabhängig gewichtet wird.

5. Verfahren nach Anspruch 3 oder 4, **dadurch gekennzeichnet**, daß die Werte in den Matrixzellen bzw. Listenplätze in bestimmten Zeitintervallen für Sender bei zugeordneten Empfangsantennen auf einen festen Wert Ds gesetzt werden und für Sender bei nicht zugeordneten Empfangsantennen auf 0 gesetzt werden, wobei Ds eine Zeitspanne angibt, nach der die Zuordnung überprüft wird.

6. Verfahren nach einem der vorstehenden Ansprüche, **dadurch gekennzeichnet**, daß eine Kennung nur dann als zum eigenen Fahrzeug gehörend bewertet wird, wenn die - ggfs. gewichtete - Intensität des empfangenen Signales einen Schwellenwert überschreitet.

7. Verfahren nach einem der vorstehenden Ansprüche, **dadurch gekennzeichnet**, daß Signale mit einer bislang noch nicht als zum eigenen Fahrzeug gehörend registrierten Kennung nur dann in den Intensitätsvergleich einbezogen werden, wenn sie mit auffällig hoher Intensität und/oder auffällig häufig, insbesondere regelmäßig auftreten.

8. Verfahren nach einem der Ansprüche 1 bis 7, **dadurch gekennzeichnet**, daß die Signale, die von einem jeden der Sender stammen, auf Schwankungen des Signalpegels untersucht werden und daß die Sender, deren Signale infolge des Fahrens mit schwankenden Signalpegeln empfangen werden, laufenden Rädern zugeordnet werden, wohingegen etwaige Sender, deren Signale mit einem Signalpegel empfangen werden, welcher nicht infolge des Fahrens schwankt, einem oder mehreren mitgeführten Reserverädern zugeordnet werden oder unberücksichtigt bleiben.

9. Verfahren nach einem der Ansprüche 1 bis 8, **dadurch gekennzeichnet**, daß das Reifendrucküberwachungssystem zusätzlich an jedem Rad einen Temperaturfühler enthält und der am Rad vorgesehene Sender Signale aussendet, die nicht nur Information über den gemessenen Druck, sondern auch Information über die gemessene Temperatur enthalten,
daß die Signale, die von einem jeden der Sender stammen, auf einen Temperaturanstieg untersucht werden und daß die Sender, deren Signale infolge des Fahrens einen Temperaturanstieg zeigen, laufenden Rädern zugeordnet werden, wohingegen etwaige Sender, deren Signale keinen Temperaturanstieg infolge des Fahrens anzeigen, einem oder mehreren mitgeführten Reserverädern zugeordnet werden oder unberücksichtigt bleiben.

## Claims

1. A method for allocating transmitters of a tyre pressure monitoring system which consists of a pressure sensor, a transmitter, and a transmitting antenna at each of N wheels of a vehicle, of at least one receiving antenna respectively allocated to them on the body, and of a connected electronic receiving and analysis system, as belonging to the local vehicle, by allocating an identifier characterizing the individual wheel to its transmitter, by emitting signals containing the identifier, and by forwarding the signals to the central electronic receiving and analysis system,
characterized by the following process steps:
- recording the intensities of the signals received by the respective receiving antenna and deriving from various transmitters, under the signals' identifiers;
- comparing the intensities of the signals of different identifiers received by one and the same receiving antenna, such that multiple successively received signals are taken into account in the intensity comparison;
- selecting those N transmitter identifiers which occur in the signals received with the greatest intensifies at a receiving antenna; and
- storing the N transmitter identifiers in the central electronic receiving and analysis system as belonging to the vehicle.

2. The method as defined in Claim 1, wherein the events in which signals with a specific identifier were received by a specific receiving antenna at maximum intensity are counted under an address which allocates the transmitter's identifier to the relevant antenna.

3. The method as defined in one of the foregoing claims, wherein there is constituted in the electronic analysis system a list - in the case of a vehicle which has multiple receiving antennas, a matrix - consisting of transmitter identifiers and receiving antennas, in which the value of the list place of a transmitter identifier or the value of the individual matrix cell is incremented when the greatest intensity is recorded for the relevant combination of transmitter identifier and receiving antenna.

4. The method as defined in Claim 3, wherein the value by which the number of events of a specific allocation is incremented when a further event occurs, or by which the content of a matrix cell or a list place is incremented, is weighted as a function of intensity.

5. The method as defined in Claim 3 or 4, wherein the values in the matrix cells or list places are set, at specific time intervals, to a fixed value Ds for transmitters with allocated receiving antennas, and to zero for transmitters without allocated receiving antennas, Ds defining a time after which the allocation is checked.

6. The method as defined in one of the foregoing claims, wherein an identifier is evaluated as belonging to the local vehicle only if the (optionally weighted) intensity of the received signal exceeds a threshold value.

7. The method as defined in one of the foregoing claims, wherein signals with an identifier not yet recorded as belonging to the local vehicle are incorporated into the intensity comparison only if they occur with conspicuously high intensity and/or conspicuously often, in particular regularly.

8. The method as defined in one of Claims 1 through 7, wherein the signals that derive from each one of the transmitters are examined for fluctuations in the signal level; and the transmitters whose signals are received with fluctuating signal levels as a result of vehicle motion are allocated to running wheels, whereas any transmitters whose signals are received with a signal level which does not fluctuate as a result of vehicle motion are allocated to one or more onboard spare wheels, or are left out of consideration.

9. The method as defined in one of Claims 1 through 8, wherein the tyre pressure monitoring system additionally contains a temperature sensor at each wheel, and the transmitter provided at the wheel emits signals which contain not only information about the measured pressure, but also information about the measured temperature;
the signals that derive from each one of the transmitters are examined for a temperature rise; and
the transmitters whose signals show a temperature rise as a result of vehicle motion are allocated to running wheels, whereas any transmitters whose signals do not display a temperature rise as a result of vehicle motion are allocated to one or more onboard spare wheels or are left out of consideration.

## Revendications

1. Procédé pour l'attribution d'émetteurs d'un système de surveillance de la pression de pneumatiques, qui est constitué respectivement par un capteur de pression, respectivement par un émetteur et respectivement par une antenne d'émission sur chacune des N roues d'un véhicule, par au moins une antenne de réception qui leur est attribuée, sur la carrosserie, et par une électronique de réception et d'évaluation raccordée, à titre d'émetteurs appartenant au véhicule propre, par l'attribution à un émetteur d'un critère d'identification caractérisant la roue individuelle, par l'émission des signaux contenant le critère d'identification et par la transmission des signaux à l'électronique centrale de réception et d'évaluation,
caractérisé par les étapes opératoires ci-après consistant à:
enregistrer les intensités des signaux reçus par l'antenne de réception respective et provenant de plusieurs émetteurs, dans le cadre de leur critère d'identification,
comparer les intensités des signaux possédant un critère d'identification différent, reçu par une seule et même antenne de réception, de telle sorte que, lors de la comparaison de l'intensité, on prend en compte plusieurs signaux reçus de manière successive,
sélectionner les N critères d'identification d'émetteurs qui apparaissent dans les signaux présentant les intensités maximales, reçus par une antenne de réception, et
mémoriser les N critères d'identification d'émetteurs dans l'électronique centrale de réception et d'évaluation, à titre de critères d'identification appartenant au véhicule.

2. Procédé selon la revendication 1, caractérisé en ce qu'on compte dans une adresse qui attribue le critère d'identification de l'émetteur à l'antenne correspondante, les événements correspondants à la réception avec une intensité maximale de signaux possédant un critère d'identification déterminé par une antenne de réception.

3. Procédé selon l'une quelconque des revendications précédentes, caractérisé en ce qu'on établit dans l'électronique d'évaluation, une liste, dans le cas d'un véhicule qui possède plusieurs antennes de réception, une matrice constituée par des critères d'identification d'émetteurs et par des antennes de réception, dans laquelle on augmente la valeur de la place d'un critère d'identification d'émetteur dans la liste, respectivement la valeur de la cellule individuelle de la matrice lorsque, pour la combinaison correspondante du critère d'identification de l'émetteur et de l'antenne de réception, on enregistre l'intensité maximale.

4. Procédé selon la revendication 3, caractérisé en ce qu'on pondère, en fonction de l'intensité, la valeur à laquelle on a élevé le nombre des événements d'une attribution déterminée lors de l'apparition d'un événement supplémentaire, respectivement le contenu d'une cellule de la matrice, respectivement d'un emplacement dans la liste.

5. Procédé selon la revendication 3 ou 4, caractérisé en ce qu'on attribue une valeur fixe Ds aux valeurs dans les cellules de la matrice, respectivement dans l'emplacement de la liste, à des intervalles de temps déterminés, pour des émetteurs auxquels des antennes de réception ont été attribuées et on leur attribue la valeur zéro pour des émetteurs auxquels des antennes de réception n'ont pas été attribuées, Ds représentant le laps de temps après lequel on vérifie l'attribution.

6. Procédé selon l'une quelconque des revendications précédentes, caractérisé en ce qu'on n'estime un critère d'identification comme appartenant au véhicule propre que lorsque l'intensité - le cas échéant pondérée - du signal reçu dépasse une valeur seuil.

7. Procédé selon l'une quelconque des revendications précédentes, caractérisé en ce que des signaux, dont le critère d'identification n'a pas encore été enregistré jusqu'à présent comme appartenant au véhicule propre, ne sont pris en compte dans la comparaison de l'intensité que lorsqu'ils apparaissent avec une intensité particulièrement élevée et/ou de manière particulièrement fréquente, en particulier de manière régulière.

8. Procédé selon l'une quelconque des revendications 1 à 7, caractérisé en ce que les signaux qui proviennent de chacun des émetteurs sont analysés en ce qui concerne des fluctuations du niveau du signal, et en ce que les émetteurs dont les signaux ont été reçus, en fonction de la conduite, avec des niveaux de signaux fluctuants sont attribués à des roues en mouvement, tandis que n'importe quel émetteur, dont les signaux sont reçus avec un niveau de signal qui ne fluctue pas suite à la conduite, est attribué à une ou plusieurs roues de rechange transportées ou n'est pas pris en compte.

9. Procédé selon une quelconque des revendications 1 à 8, caractérisé en ce que le système de surveillance de la pression des pneumatiques contient, en outre, sur chaque roue, un capteur de température et l'émetteur prévu sur la roue émet des signaux qui contiennent non seulement des informations concernant la pression mesurée, mais encore des informations concernant la température mesurée, en ce que les signaux qui proviennent de chacun des émetteurs sont analysés pour détecter une élévation de la température, et en ce que les émetteurs, dont les signaux manifestent une élévation de la température suite à la conduite, sont attribués à des roues en mouvement, tandis que n'importe quel émetteur, dont les signaux n'indiquent aucune élévation de la température suite à la conduite, est attribué à une ou plusieurs roues de rechange transportée ou n'est pas pris en compte.
